(19) Europäisches Patentamt / European Patent Office / Office européen des brevets

(11) **EP 3 575 348 A1**

(12) **EUROPEAN PATENT APPLICATION**
published in accordance with Art. 153(4) EPC

(43) Date of publication:
04.12.2019 Bulletin 2019/49

(21) Application number: 18744260.3

(22) Date of filing: 24.01.2018

(51) Int Cl.:
*C08J 5/18* (2006.01)    *C08K 3/04* (2006.01)
*C08K 3/32* (2006.01)    *C08K 5/5399* (2006.01)
*C08L 101/00* (2006.01)

(86) International application number:
**PCT/JP2018/002157**

(87) International publication number:
**WO 2018/139494 (02.08.2018 Gazette 2018/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: 25.01.2017 JP 2017010948

(71) Applicant: Sekisui Chemical Co., Ltd.
Osaka-shi, Osaka 530-8565 (JP)

(72) Inventors:
• **SHIMAMOTO, Michio**
  **Hasuda-shi**
  **Saitama 349-0198 (JP)**
• **DOHI, Akihito**
  **Hasuda-shi**
  **Saitama 349-0198 (JP)**

(74) Representative: **Ter Meer Steinmeister & Partner
Patentanwälte mbB
Nymphenburger Straße 4
80335 München (DE)**

(54) **THERMALLY EXPANDABLE FIRE-RESISTANT SHEET**

(57) A thermally expandable fire-resistant sheet comprising a matrix resin and thermally expandable graphite, the sheet having a dissolution rate of 3% or less after immersion in pure water at 60°C for 1 week.

Fig. 1

EP 3 575 348 A1

**Description**

Technical Field

The present invention relates to a thermally expandable fire-resistant sheet.

Background Art

In the field of architecture, a thermally expandable fire-resistant sheet, prepared by mixing into a matrix resin an inorganic material that expands upon heating, has been increasingly used as a construction material for fittings, posts, wall materials, or the like to prevent fire. When heated, such a thermally expandable fire-resistant sheet expands and the resulting combustion residue forms a fire-resistant heat-insulating layer, thus exhibiting fire-resistant heat insulation performance.

When the thermally expandable fire-resistant sheet is applied to a site exposed to wind and rain or a site with high humidity due to condensation or the like, components dissolve out, which may cause performance degradation and poor appearance.

PTL 1 discloses a fire-resistant resin composition comprising a thermoplastic resin, a phosphorus compound, a neutralized heat-expandable graphite, and an inorganic filler, wherein the sum of the phosphorus compound and the neutralized heat-expandable graphite is 20 to 200 parts by weight and the amount of the inorganic filler is 50 to 500 parts by weight, based on 100 parts by weight of the thermoplastic resin, the weight ratio of the neutralized heat-expandable graphite to the phosphorus compound is 9:1 to 1:100, and the phosphorus compound is ammonium polyphosphate.

Citation List

Patent Literature

PTL 1: JPH09-227716A

Summary of Invention

Technical Problem

As disclosed in PTL 1, conventional thermally expandable fire-resistant sheets usually comprise a phosphorus compound in addition to thermally expandable graphite. However, phosphorus compounds are sensitive to water and easily dissolve and hydrolyze. Therefore, phosphorus compounds cannot be used at sites where water or humidity is present, and the site of application is thus limited.

An object of the present invention is to provide a thermally expandable fire-resistant sheet that has excellent fire resistance and that is less susceptible to performance deterioration when exposed to moisture.

Solution to Problem

To achieve the above object, the present invention provides the following.

Item 1. A thermally expandable fire-resistant sheet comprising a matrix resin and thermally expandable graphite, the sheet having a dissolution rate of 3% or less after immersion in pure water at 60°C for 1 week.

Item 2. The thermally expandable fire-resistant sheet according to Item 1, wherein an expansion residue after heating at 600°C for 30 minutes has a compressive strength of 0.2 kgf/cm$^2$ or more.

Item 3. The thermally expandable fire-resistant sheet according to Item 1 or 2, wherein an amount of phosphorus in the sheet is 10 mass% or less.

Item 4. The thermally expandable fire-resistant sheet according to any one of Items 1 to 3, wherein an amount of thermally expandable graphite in the sheet is 15 mass% or more and less than 60 mass%.

Item 5. The thermally expandable fire-resistant sheet according to any one of claims 1 to 4, wherein the sheet comprises a poorly water-soluble phosphorus compound and an amount of phosphorus in the sheet is 0.5 mass% or more.

Item 6. The thermally expandable fire-resistant sheet according to any one of claims 1 to 5, wherein the sheet comprises a poorly water-soluble phosphorus compound and an amount of the poorly water-soluble phosphorus compound is 3 mass% or more.

Item 7. The thermally expandable fire-resistant sheet according to Item 5 or 6, wherein the poorly water-soluble phosphorus compound is at least one member selected from the group consisting of ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters.

Item 8. The thermally expandable fire-resistant sheet according to any one of Items 1 to 4, comprising at least one poorly water-soluble phosphorus compound selected from the group consisting of ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters.

Advantageous Effects of Invention

According to the expandable fire-resistant sheet of the present invention, performance deterioration due to exposure to moisture can be inhibited, while excellent fire resistance is maintained.

Brief Description of Drawing

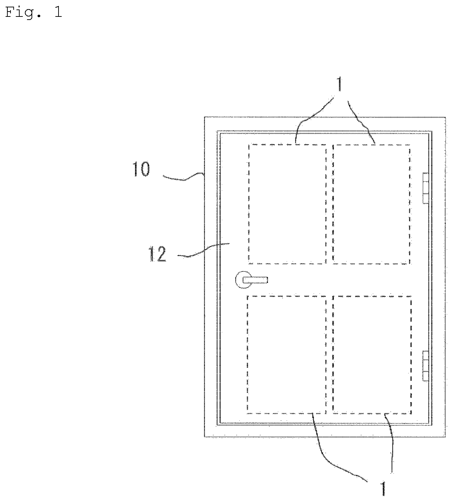

Fig. 1 is a schematic diagram illustrating application of the thermally expandable fire-resistant sheet of the present invention to a door.

Description of Embodiments

Embodiments of the thermally expandable fire-resistant sheet of the present invention are described below.

The thermally expandable fire-resistant sheet of the present invention comprises a matrix resin and thermally expandable graphite and has a dissolution rate of 3% or less after immersion in pure water at 60°C for 1 week. The dissolution rate is calculated according to the following formula:

$$\text{(Mass of precipitate in immersion water)}/\text{(Mass of thermally expandable fire-resistant sheet before immersion)} \times 100\ (\%).$$

After immersion in pure water at 60°C for 1 week, the thermally expandable fire-resistant sheet of the present invention has a dissolution rate of 3% or less, and preferably 1.5% or less. Based on this structural feature, the thermally expandable fire-resistant sheet cab be more effectively inhibited from performance deterioration when exposed to moisture, while maintaining excellent fire resistance.

Examples of matrix resins include thermoplastic resins, thermosetting resins, elastomers, rubber substances, and combinations thereof.

Examples of thermoplastic resins include polyolefin resins, such as polypropylene resins, polyethylene resins, poly(1-)butene resins, and polypentene resins; polyester resins, such as polyethylene terephthalate; and synthetic resins, such as polystyrene resins, acrylonitrile-butadiene-styrene (ABS) resins, ethylene-vinyl acetate copolymers (EVA), polycarbonate resins, polyphenylene ether resins, (meth)acrylic resins, polyamide resins, polyvinyl chloride resins (PVC), chlorinated polyvinyl chloride resins (CPVC), novolak resins, polyurethane resins, and polyisobutylene.

Examples of thermosetting resins include synthetic resins, such as polyurethane resins, phenolic resins, epoxy resins, urea resins, melamine resins, unsaturated polyester resins, and polyimides.

Examples of elastomers include olefin elastomers, styrene elastomers, ester elastomers, amide elastomers, vinyl chloride elastomers, and combinations thereof.

Examples of rubber substances include natural rubber, isoprene rubber, butadiene rubber, 1,2-polybutadiene rubber, styrene-butadiene rubber, chloroprene rubber, nitrile rubber, butyl rubber, chlorinated butyl rubber, ethylene-propylene rubber, ethylene-propylene-diene rubber (EPDM), chlorosulfonated polyethylene, acrylic rubber, epichlorohydrin rubber, multi-vulcanized rubber, unvulcanized rubber, silicone rubber, fluororubber, urethane rubber, and like rubber substances.

These synthetic resins, elastomers and/or rubber substances can be used singly or in a combination of two or more.

Among these synthetic resins, elastomers and/or rubber substances, unvulcanized rubber such as butyl rubber, polyolefin resins, olefin thermoplastic elastomers (TPO), and ethylene-propylene-diene rubber (EPDM) are preferable to obtain flexible and rubber-like properties. In terms of fire resistance, polyvinyl chloride resin (PVC), chlorinated polyvinyl chloride (CPVC), and EVA resin are preferable. From the viewpoint of increasing flame retardancy of resin and thereby enhancing fire prevention performance, epoxy resins and phenolic resins are preferable.

The amount of matrix resin in the thermally expandable fire-resistant resin composition is preferably, but not limited to, 10 to 60 mass%, more preferably 20 mass% to 60 mass%, and even more preferably 20 mass% to 50 mass%, from the viewpoint of mechanical strength, moldability, and fire resistance. The amount of matrix resin of 10 mass% or more is advantageous in terms of mechanical strength and moldability, whereas the amount of matrix resin of 60 mass% or less is advantageous in terms of fire resistance.

The thermally expandable graphite is a conventionally known substance that expands when heated. The thermally expandable graphite is formed by producing a graphite intercalation compound by treating a powder of natural flake graphite, thermal decomposition graphite, kish graphite, or the like with an inorganic acid and a strong oxidant. Examples of inorganic acids include concentrated sulfuric acid, nitric acid, selenic acid, and the like. Examples of strong oxidants include concentrated nitric acid, perchloric acid, perchlorate, permanganate, dichromate, hydrogen peroxide, and the like. The thermally expandable graphite is a crystalline compound in which a carbon layer structure is maintained.

The thermally expandable graphite may be optionally neutralized. More specifically, the thermally expandable graphite obtained by acid treatment as described above may further be neutralized with ammonia, a lower aliphatic amine, an alkali metal compound, an alkaline earth metal compound, or the like.

The amount of thermally expandable graphite in the thermally expandable graphite is preferably, but not limited to, 5 to 60 mass%, and more preferably 15 mass% or more. The amount of the thermally expandable graphite of 15 mass% or more can bring about expansion that is more suitable for preventing fire penetration. The amount of the thermally expandable graphite of less than 60 mass% is preferable in terms of fire resistance and mechanical strength of the thermally expandable fire-resistant sheet.

The particle size of the thermally expandable graphite is preferably in the range of 20 to 200 mesh. When the grain size is 200 mesh or smaller, the degree of expansion of the graphite is sufficient to obtain an expandable heat-insulating layer. When the particle size is 20 mesh or larger, the graphite exhibits good dispersibility when mixed into a resin.

The average particle diameter of the thermally expandable graphite is preferably, but not limited to, 200 to 1000 $\mu$m, and more preferably 200 to 600 $\mu$m. The average particle diameter of the thermally expandable graphite can be measured by using a commercially available laser diffraction/scattering device for measuring particle size.

The thermally expandable fire-resistant sheet of the present invention preferably comprises a matrix resin and thermally expandable graphite such that the thermal decomposition temperature of the matrix resin is higher than the expansion onset temperature of the thermally expandable graphite. Since the expansion onset temperature of the thermally expansion graphite is lower than the decomposition onset temperature of the resin component, the thermally expandable fire-resistant sheet of the present invention can attain high expansion and high compressive strength after combustion. This is presumably for the following reason. When the thermally expandable fire-resistant sheet is heated, the expansion onset temperature of the thermally expandable graphite is lower than the thermal decomposition temperature of the resin component; therefore, the thermally expandable graphite starts to expand before the resin component decomposes, thus forming a hard heat-insulating layer of the expandable graphite. This delays resin component decomposition and disposes the resin component to fill interstices of the heat-insulating layer, thereby maintaining high compressive strength while ensuring high expansion. The thermal decomposition temperature of the matrix resin refers to a temperature at which a solid resin component decomposes and a decrease in mass starts to be confirmed.

The average aspect ratio of the thermally expandable graphite is preferably, but not limited to, 20 or more. An average aspect ratio of the thermally expandable graphite of 20 or more can enhance water resistance of the fire-resistant resin composition.

The thermally expandable graphite preferably has an average aspect ratio of 20 or more, and more preferably 25 or more. When the aspect ratio of the thermally expandable graphite is too high, cracking may occur. Therefore, the aspect ratio is preferably 1000 or less.

The average aspect ratio is a ratio of the average diameter in the horizontal direction to the thickness in the perpendicular direction. The thermally expandable graphite has a substantially plate shape; therefore, the perpendicular direction can be regarded as corresponding to the thickness direction, and the horizontal direction can be regarded as corresponding to the diametrical direction. Accordingly, the value obtained by dividing the maximum size in the horizontal direction by the thickness in the perpendicular direction is defined as the aspect ratio.

The aspect ratio of a sufficiently large number of graphite pieces, i.e., the aspect ratio of at least ten graphite pieces, is measured, and their average value is regarded as the average aspect ratio. The average particle diameter of the thermally expandable graphite can also be obtained as the average value of the maximum size in the horizontal direction.

The maximum size of the thermally expandable graphite in the horizontal direction and the thickness of the flake graphite can be measured using, for example, a field emission scanning electron microscope (FE-SEM).

A smaller amount of phosphorus in the thermally expandable fire-resistant sheet of the present invention is preferable from the viewpoint of inhibiting performance deterioration of the thermally expandable fire-resistant sheet due to exposure to moisture, such as water and humidity. The thermally expandable fire-resistant sheet preferably has a phosphorus in an amount of 10 mass% or less. Alternatively, when the thermally expandable fire-resistant sheet contains a poorly water-soluble phosphorus compound, the amount of phosphorus derived from the poorly water-soluble phosphorus compound and contained in the thermally expandable fire-resistant sheet, or the amount of phosphorus in the thermally expandable fire-resistant sheet, can be 0.5 mass% or more, preferably 3 mass% or more, and more preferably 5 mass% or more.

When the amount of phosphorus derived from the poorly water-soluble phosphorus compound and contained in the thermally expandable fire-resistant sheet, or the amount of phosphorus in the thermally expandable fire-resistant sheet, is 0.5 mass% or more, performance deterioration due to exposure to moisture is inhibited.

The amount of the poorly water-soluble phosphorus compound in the thermally expandable fire-resistant sheet is 3 mass% or more, preferably 5 mass% or more, and more preferably 8 mass% or more. The amount of the poorly water-soluble phosphorus compound in the thermally expandable fire-resistant sheet is 30 mass% or less, preferably 20 mass% or less, and more preferably 10 mass% or less. When the thermally expandable fire-resistant sheet includes a poorly water-soluble phosphorus compound within the above range, the sheet is inhibited from performance deterioration due to exposure to moisture.

The amount of phosphorus can be determined by calculation from the amount incorporated or by a known measurement method, such as fluorescent X-ray measurement or ICP analysis.

A poorly water-soluble flame retardant is defined as follows. In the case where a resin other than vinyl chloride resin or chlorinated polyvinyl chloride resin is used as the matrix resin, when a blend of 50 mass% of the matrix resin, 25 mass% of expandable graphite, and 25 mass% of a compound has a dissolution rate of 3% or less after immersion in pure water at 60°C for 1 week, the compound is defined as a poorly water-soluble flame retardant. In the case where vinyl chloride resin or chlorinated polyvinyl chloride resin is used as the matrix resin, when a blend of 30 mass% of the vinyl chloride resin or chlorinated polyvinyl chloride resin, 20 mass% of DIDP, 25 mass% of expanded graphite, and 25 mass% of a compound has a dissolution rate of 3% or less after immersion in pure water at 60°C for 1 week, the compound is defined as a poorly water-soluble flame retardant. When the compound is a phosphorus compound, the poorly water-soluble flame retardant is a poorly water-soluble phosphorus compound.

The poorly water-soluble phosphorus compound includes poorly water-soluble inorganic phosphorus compounds and poorly water-soluble organic phosphorous compounds. Examples of poorly water-soluble inorganic phosphorus compounds include ammonium polyphosphate, aluminum phosphite, primary aluminum phosphate, secondary aluminum phosphate, tertiary aluminum phosphate, aluminum metaphosphate, condensed aluminum phosphate, and combinations thereof. Examples of poorly water-soluble organic phosphorous compounds include melam polyphosphate, melamine polyphosphate, melem polyphosphate, poorly water-soluble phosphoric acid esters that act as phosphorus plasticizers, and combinations thereof.

Examples of poorly water-soluble phosphoric acid esters include trimethyl phosphate (TMP), triethyl phosphate (TEP), tributyl phosphate (TBP), tris(2-ethylhexyl)phosphate (TOP), triphenyl phosphate (TPP), tricresyl phosphate (TCP), trixylenyl phosphate (TXP), cresylphenyl phosphate (CDP), 2-ethylhexyl diphenyl phosphate, spirocyclic diphosphate compounds, and the like.

Preferably, the poorly water-soluble phosphorus compound is at least one member selected from ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters. More preferably, the poorly water-soluble phosphorus compound is at least one member selected from aluminum phosphite, melam polyphosphate, melamine polyphosphate, melem polyphosphate, and poorly water-soluble phosphoric acid esters. Even more preferably, the poorly water-soluble phosphorus compound is at least one member selected from aluminum phosphite, melam polyphosphate, melamine polyphosphate, and poorly water-soluble phosphoric acid esters.

These compounds impart flame retardancy and water resistance to the thermally expandable fire-resistant sheet.

The amount of phosphorus, such as the amount of phosphorus derived from a phosphorous compound, in the thermally expandable fire-resistant sheet is preferably, but not limited to, 10 mass% or less, preferably 8 mass% or less, more preferably 5 mass% or less, and even more preferably 1 mass% or less, from the viewpoint of suppressing performance deterioration due to exposure to moisture, such as water and humidity. The "the amount of phosphorus" refers to the amount of a portion that is phosphorus. For example, when phosphorus is derived from a phosphorus compound, the amount of phosphorus refers to the amount of phosphorus contained in the phosphorus compound.

The thermally expandable fire-resistant sheet of the present invention can further comprise an inorganic filler. When an expandable heat-insulating layer is formed, the inorganic filler increases heat capacity and suppresses heat transfer and also functions as an aggregate to thereby increase the strength of the expandable heat insulating layer. Examples of the inorganic filler include, but are not limited to, metal oxides, such as alumina, zinc oxide, titanium oxide, calcium oxide, magnesium oxide, iron oxide, tin oxide, antimony oxide, and ferrite; metal hydroxides, such as calcium hydroxide, magnesium hydroxide, aluminum hydroxide, and hydrotalcite; metal carbonates, such as basic magnesium carbonate, calcium carbonate, magnesium carbonate, zinc carbonate, strontium carbonate, and barium carbonate; inorganic phosphates as a flame retardant; calcium salts, such as calcium sulfate, gypsum fiber, and calcium silicate; silica, diatomaceous earth, dawsonite, barium sulfate, talc, clay, mica, montmorillonite, bentonite, activated clay, sepiolite, imogolite, sericite, glass fiber, glass bead, silica balloon, aluminium nitride, boron nitride, silicon nitride, carbon black, graphite, carbon fiber, carbon balloon, charcoal powder, various types of metal powder, potassium titanate, magnesium sulfate, lead zirconium titanate, zinc stearate, calcium stearate, aluminum borate, molybdenum sulfide, silicon carbide, stainless steel fiber, zinc borate, various types of magnetic powder, slag fiber, fly ash, dehydrated sludge, and the like. These inorganic fillers can be used singly, or in a combination of two or more.

The average particle diameter of the inorganic filler is preferably 0.5 to 100 $\mu$m, and more preferably 1 to 50 $\mu$m. When a small amount of inorganic filler is added, dispersibility of the inorganic filler significantly influences the performance. Therefore, using an inorganic filler with a small average particle diameter is preferable. However, if the average particle diameter is smaller than 0.5 $\mu$m, secondary aggregation occurs, which decreases dispersibility. Accordingly, the inorganic filler preferably has an average particle diameter of 0.5 $\mu$m or more. When a large amount of inorganic filler is added, a higher level of filling increases the viscosity of the resin composition, which decreases moldability. The viscosity of the resin composition can be reduced by increasing the average particle diameter. Therefore, an inorganic filler with a large average particle diameter is preferable. However, an average particle diameter of more than 100 $\mu$m results in poor surface properties of the molded product and poor dynamic performance of the resin composition. Therefore, the average particle diameter is preferably 100 $\mu$m or less. The average particle diameter of the inorganic filler can be determined by measuring the average particle diameter of a sufficiently large number of particles of the inorganic filler, i.e., at least ten particles of the inorganic filler, by using a commercially available laser diffraction/scattering device for measuring particle size.

Examples of such commercially available inorganic fillers include H-42M having a particle diameter of 1 $\mu$m (produced by Showa Denko K.K.), and H-31 having a particle diameter of 18 $\mu$m (produced by Showa Denko K.K.) as aluminum hydroxide; Whiton SB Red having a particle diameter of 1.8 $\mu$m (produced by Shiraishi Calcium Kaisha Ltd.), and BF300 having a particle diameter of 8 $\mu$m (produced by Shiraishi Calcium Kaisha Ltd.) as calcium carbonate; and the like. A combination of an inorganic filler having a large particle diameter and an inorganic filler having a small particle diameter is more preferable. A higher level of filling is achieved by the combined use.

The amount of inorganic filler in the thermally expandable fire-resistant sheet is preferably, but not limited to, 1 to 50 mass%.

The total amount of the thermally expandable graphite and inorganic filler in the thermally expandable fire-resistant sheet is preferably 5 to 80 mass%. The total amount is preferably 5 mass% or more in terms of satisfying the residue amount after combustion and obtaining sufficient fire resistance performance. On the other hand, the total amount is preferably 80 mass% or less in terms of maintaining mechanical properties. The thermally expandable fire-resistant sheet can further contain a plasticizer.

The plasticizer can be any plasticizer that is commonly used in the production of a polyvinyl chloride resin molded product. Specific examples include phthalate plasticizers, such as di-2-ethylhexyl phthalate (DOP), dibutyl phthalate (DBP), diheptyl phthalate (DHP), and diisodecyl phthalate (DIDP); fatty acid ester plasticizers, such as di-2-ethylhexyl adipate (DOA), diisobutyl adipate (DIBA), and dibutyl adipate (DBA); epoxidized ester plasticizers, such as epoxidized soybean oil; polyester plasticizers, such as adipic acid esters and adipic acid polyesters; trimellitate plasticizers, such as tri-2-ethylhexyl trimellitate (TOTM) and triisononyl trimellitate (TINTM); process oils, such as mineral oils; and the like. Such plasticizers can be used singly, or in a combination of two or more.

A small amount of the plasticizer tends to deteriorate extrusion moldability, whereas a large amount of the plasticizer tends to excessively soften the resulting molded product. Accordingly, the amount of plasticizer contained in the thermally expandable fire-resistant sheet is preferably, but not limited to, within the range of 0 to 40 mass%, and more preferably 5 to 35 mass%.

The thermally expandable fire-resistant sheet of the present invention can further contain a flame retardant organic filler. The flame retardant organic filler is an organic compound containing a hetero atom, such as nitrogen or phosphorus, in addition to carbon and hydrogen. The flame retardant organic filler is a compound that can impart flame retardancy to the thermally expandable sheet.

The compound of the flame retardant organic filler is an organic material that contains carbon atoms in a proportion of 35 mass% or less, more preferably 30 mass% or less, in the compound. A proportion of carbon atoms not exceeding the upper limit value facilitates imparting fire resistance to the thermally expandable sheet. The proportion of carbon atoms is preferably 3 mass% or more, more preferably 7 mass% or more, and even more preferably 12 mass% or more. A proportion of carbon atoms not less than the lower limit value facilitates enhancing processability.

The proportion of carbon atoms can be calculated from the chemical structure. The proportion of carbon atoms in polymeric compounds can be determined by using known elemental analyses or the like.

The flame retardant organic filler is preferably a nitrogen-containing flame retardant. More specifically, at least one member selected from melamine compounds and guanidine compounds can be preferably used. The flame retardant organic filler does not include poorly water-soluble phosphorus compounds.

Examples of melamine compounds include melamine or melamine derivatives, such as melamine, melem, melam and melon, and salts thereof. Examples of salts of melamine or melamine derivatives include melamine cyanurate, melamine sulfate, melam pyrosulfurate, melam organic sulfonate, melamine organic phosphate, melamine organic phosphinate, melamine borate, and the like.

Examples of guanidine compounds include guanidine sulfamate, guanidine phosphate, guanylurea phosphate, and the like.

These compounds can be used singly, or in a combination of two or more.

Among these, salts of melamine or melamine derivatives, or guanidine compounds are preferable. Specifically, at least one member selected from melamine cyanurate, melamine sulfate, guanidine sulfamate, and guanidine phosphate is more preferable, and melamine cyanurate is even more preferable.

In the present invention, using a melamine compound or guanidine compound as described above, in particular, melamine cyanurate, facilitates providing better fire resistance while maintaining good processability.

In the present invention, the amount of the flame retardant organic filler in the thermally expandable sheet is preferably 3 to 30 mass%, based on the total amount of the thermally expandable sheet. When the amount of the flame retardant organic filler is 3 mass% or more, the proportion of the matrix component, which is a combustible component, is relatively low. Therefore, even if the inorganic filler is used in a proportion within the predetermined range, fire resistance can be sufficiently enhanced. When the amount of flame retardant organic filler is 30 mass% or less, the proportion of the matrix component is relatively high. This provides good processability and also enables the amount of the inorganic filler to increase, thus being preferable in terms of fire resistance.

The amount of the flame retardant organic filler is preferably 5 mass% or more, and more preferably 10 mass% or more, and preferably 25 mass% or less, and more preferably 20 mass% or less in terms of processability and flame retardancy.

The other components that can be incorporated in the thermally expandable fire-resistant sheet include, for example, phenolic, amine- or sulfur-based antioxidants, metal deterioration inhibitors, antistatic agents, stabilizers, crosslinking agents, lubricants, softening agents, pigments, and the like. These components can be used within the range that does not impair the properties of the sheet.

The thermally expandable fire-resistant sheet is not particularly limited insofar as the sheet can block heat by its expansion layer when exposed to a high temperature, for example, during a fire, and insofar as the expansion layer has a certain strength. The sheet preferably has an expansion magnification of 3 to 50 times after the sheet is heated for 30 minutes under a heating condition of 50 kW/m$^2$. When the expansion magnification is 3 times or more, the expanded volume can sufficiently fill the burned portions of the matrix component. When the expansion magnification is 50 times or less, the strength of the expansion layer can be maintained, thereby maintaining the effect of preventing fire penetration. The expansion magnification of each test piece of the thermally expandable fire-resistant sheet is calculated according to the following formula:

$$\text{(Thickness of test piece after heating)}/\text{(Thickness of test piece before heating)}.$$

The thermally expandable fire-resistant sheet can be produced by mixing the matrix component and thermally expandable graphite optionally with other components to prepare a fire-resistant resin composition and applying or molding the composition. Molding includes press molding, extrusion molding, and injection molding. Coating and molding are well known in the art.

The thermally expandable fire-resistant sheet may be further laminated with a base material. The base material may be laminated on one side or both sides of the thermally expandable fire-resistant sheet. The base material is typically a woven or non-woven fabric. The fiber used in the woven or non-woven fabric is preferably, but not limited to, an incombustible material or a semi-incombustible material. Examples of preferable fibers include glass fibers, ceramic fibers, cellulose fibers, polyester fibers, carbon fibers, graphite fibers, thermosetting resin fibers, and the like.

"Incombustible material" herein refers to a material that does not combust for the first 20 minutes after fire heat generated by a normal fire starts to be applied (see the Building Standards Act, Article 2, (xi), and the Order for Enforcement of the Building Standards Act, Article 108-2 (i)). Examples of incombustible materials include carbon fibers, metals, glass, and the like. "Semi-incombustible material" refers to a material that does not combust for the first 10 minutes after fire heat generated by a normal fire starts to be applied (see the Order for Enforcement of the Building Standards Act, Article 1 (v)).

The thickness of the thermally expandable fire-resistant sheet of the present invention is preferably, but not limited to, 0.2 to 10 mm. A thickness of 0.2 mm or more provides insulating properties, whereas a thickness of 10 mm or less facilitates handling of the sheet in terms of mass.

After heating at 600°C for 30 minutes, the thermally expandable fire-resistant sheet of the present invention preferably has a compressive strength (also referred to as "residue hardness") of 0.2 kgf/cm$^2$ or more. In a more preferable embodiment, the compressive strength is 0.3 kgf/cm$^2$ or more and 2 kgf/cm$^2$ or less. In an even more preferable embodiment, the compressive strength is 0.5 kgf/cm$^2$ or more and 2 kgf/cm$^2$ or less.

The expansion magnification of the test piece of the resin composition is calculated according to the following formula: (Thickness of test piece after heating)/(Thickness of test piece before heating). After heating at 600°C for 30 minutes, the thermally expandable fire-resistant sheet of the present invention preferably has an expansion magnification of 10 times or more. In a preferable embodiment, the expansion magnification is 15 times or more and 60 times or less. In an even more preferable embodiment, the expansion magnification is 20 times or more and 50 times or less.

The compressive strength of the expansion residue is calculated by compressing each heated test piece with a known compression tester and measuring the maximum compressive stress upon 10-mm compression from the upper surface of the residue. More specifically, the expansion residue is compressed at a rate of 0.1 cm/second with a three-point indenter using a compression tester and the maximum stress upon 10-mm compression from the upper residue is measured. The compressive strength refers to the maximum stress thus obtained.

The thermally expandable fire-resistant sheet of the present invention can be used to impart fire resistance to building materials. For example, the thermally expandable fire-resistant sheet can be applied to fittings such as windows (e.g., double sliding windows, casement windows, and double-hung windows), *shoji* (a Japanese sliding window or door), *tobira* (i.e., a door), to (a Japanese door), and *fusuma* (a Japanese sliding door); columns; or walls such as ferro-concrete walls to reduce or prevent fire and smoke entry. In particular, the thermally expandable fire-resistant sheet of the present invention has excellent shape retention. Therefore, for example, as shown in Fig. 1, when the thermally expandable fire-resistant sheet 1 is applied to the body 12 of a door 10, the combustion residue does not easily collapse after combustion even when the sheet is applied in the perpendicular direction, thus exhibiting excellent fire resistance.

Embodiments of the present invention are specifically described above. However, the present invention is not limited to these embodiments. Various modifications can be made within the technical spirit of the present invention.

The configurations, methods, processes, shapes, materials, numerical values, and the like mentioned in the above embodiments are merely examples, and, if necessary, different configurations, methods, processes, shapes, materials, numerical values, and the like may be used.

In addition, the configurations, methods, processes, shapes, materials, numerical values, and the like described in the embodiments can be combined with each other without departing from the gist of the present invention.

For example, the present invention may also include the following.

(1) A thermally expandable fire-resistant sheet comprising a matrix resin and thermally expandable graphite, the sheet having a dissolution rate of 3% or less after immersion in pure water at 60°C for 1 week.

Based on this structural feature, the thermally expandable fire-resistant sheet can be inhibited from performance deterioration due to exposure to moisture, while maintaining excellent fire resistance.

(2) The thermally expandable fire-resistant sheet according to (1), wherein the sheet has a dissolution rate of 1.5% or less after immersion in pure water at 60°C for 1 week.

Based on this structural feature, the thermally expandable fire-resistant sheet can be more efficiently inhibited from performance deterioration due to exposure to moisture, while maintaining excellent fire resistance.

(3) The thermally expandable fire-resistant sheet according to (1) or (2), wherein an expansion residue after heating at 600°C for 30 minutes has a compressive strength of 0.2 kgf/cm$^2$ or more.

Based on this structural feature, the thermally expandable fire-resistant sheet can have high compressive strength after combustion.

(4) The thermally expandable fire-resistant sheet according to (1) or (2), wherein an expansion residue after heating at 600°C for 30 minutes has a compressive strength of 0.3 kgf/cm$^2$ or more and 2 kgf/cm$^2$ or less.

Based on this structural feature, the thermally expandable fire-resistant can have appropriately high compressive strength after combustion.

(5) The thermally expandable fire-resistant sheet according to (1) or (2), wherein an expansion residue after heating at 600°C for 30 minutes has a compressive strength of 0.5 kgf/cm$^2$ or more and 2 kgf/cm$^2$ or less.

Based on this structural feature, the thermally expandable fire-resistant sheet can have an appropriately high compressive strength after combustion.

(6) The thermally expandable fire-resistant sheet according to any one of (1) to (5), wherein the sheet has phosphorus in an amount of 10 mass% or less.

Based on this structural feature, the thermally expandable fire-resistant sheet is inhibited from performance deterioration due to exposure to moisture, such as water and humidity.

(7) The thermally expandable fire-resistant sheet according to any one of (1) to (5), wherein the sheet has phosphorus in an amount of 8 mass% or less.

Based on this structural feature, the thermally expandable fire-resistant sheet is more effectively inhibited from performance deterioration due to exposure to moisture, such as water and humidity.

(8) The thermally expandable fire-resistant sheet according to any one of (1) to (5), wherein the sheet has phosphorus in an amount of 5 mass% or less.

Based on the structural feature, the thermally expandable fire-resistant sheet is more effectively inhibited from performance deterioration due to exposure to moisture, such as water and humidity.

(9) The thermally expandable fire-resistant sheet according to any one of (1) to (5), which has phosphorus in an amount of 1 mass% or less.

Based on the structural feature, the thermally expandable fire-resistant sheet is more effectively inhibited from performance deterioration due to exposure to moisture, such as water and humidity.

(10) The thermally expandable fire-resistant sheet according to any one of (1) to (9), wherein the sheet has a thermally expandable graphite in an amount of 15 mass% or more and 60 mass% or less.

Based on this structural feature, the resulting thermally expandable fire-resistant sheet can expand in a manner more suitable for preventing fire penetration and also have sufficient heat resistance and mechanical strength.

(11) The thermally expandable fire-resistant sheet according to any one of (1) to (10), wherein the sheet comprises a poorly water-soluble phosphorus compound and the amount of the poorly water-soluble phosphorus compound is 3 mass% or more.

Based on this structural feature, the thermally expandable fire-resistant sheet is inhibited from performance deterioration due to exposure to moisture.

(12) The thermally expandable fire-resistant sheet according to any one of (1) to (10), wherein the sheet comprises a poorly water-soluble phosphorus compound and the amount of the poorly water-soluble phosphorus compound is 5 mass% or more.

Based on this structural feature, the thermally expandable fire resistant sheet is more effectively inhibited from performance deterioration due to exposure to moisture.

(13) The thermally expandable fire-resistant sheet according to any one of (1) to (10), wherein the sheet comprises a poorly water-soluble phosphorus compound and the amount of the poorly water-soluble phosphorus compound is 8 mass% or more.

Based on this structural feature, the thermally expandable fire-resistant sheet is more effectively inhibited from performance deterioration due to exposure to moisture.

(14) The thermally expandable fire-resistant sheet according to any one of (11) to (13), wherein the amount of the poorly water-soluble phosphorus compound is 30 mass% or less.

Based on this structural feature, the thermally expandable fire-resistant sheet has excellent mechanical strength and heat resistance.

(15) The thermally expandable fire-resistant sheet according to any one of (11) to (13), wherein the amount of the poorly water-soluble phosphorus compound is 20 mass% or less.

Based on this structural feature, the thermally expandable fire-resistant sheet has excellent mechanical strength and heat resistance.

(16) The thermally expandable fire-resistant sheet according to any one of (11) to (13), wherein the amount of the poorly water-soluble phosphorus compound is 10 mass% or less.

(17) The thermally expandable fire-resistant sheet according to any one of (1) to (16), wherein the sheet has phosphorus derived from a poorly water-soluble phosphorus compound in an amount of 0.5 mass% or more.

Based on this structural feature, the thermally expandable fire-resistant sheet is inhibited from performance deterioration due to exposure to moisture.

(18) The thermally expandable fire-resistant sheet according to any one of (1) to (16), wherein the sheet has a poorly water-soluble phosphorus compound-derived phosphorus in an amount of 3 mass% or more.

Based on this structural feature, the thermally expandable fire-resistant sheet is more effectively inhibited from performance deterioration due to exposure to moisture.

(19) The thermally expandable fire-resistant sheet according to any one of (1) to (16), wherein the sheet has phosphorus derived from a poorly water-soluble phosphorus compound in an amount of 5 mass% or more.

Based on this structural feature, the thermally expandable fire-resistant sheet is more effectively inhibited from performance deterioration due to exposure to moisture.

(20) The thermally expandable fire-resistant sheet according to any one of (11) to (20), wherein the poorly water-soluble phosphorus compound is a poorly water-soluble inorganic phosphorus compound, a poorly water-soluble organic phosphorus compound, or a combination of the poorly water-soluble inorganic phosphorus compound and the poorly water-soluble organic phosphorus compound,

the poorly water-soluble inorganic phosphorus compound being ammonium polyphosphate, aluminum phosphite, primary aluminum phosphate, secondary aluminum phosphate, tertiary aluminum phosphate, aluminum metaphosphate, condensed aluminum phosphate, or a combination thereof, and

the poorly water-soluble organic phosphorous compound being melam polyphosphate, melamine polyphosphate, melem polyphosphate, a poorly water-soluble phosphoric acid ester, or a combination thereof.

Based on this structural feature, the thermally expandable fire-resistant sheet is more effectively inhibited from performance deterioration due to exposure to moisture.

(21) The thermally expandable fire-resistant sheet according to any one of (11) to (20), wherein the poorly water-soluble phosphorus compound is at least one member selected from ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters.

Based on this structural feature, the thermally expandable fire-resistant sheet is more effectively inhibited from performance deterioration due to exposure to moisture.

(22) The thermally expandable fire-resistant sheet according to any one of (1) to (10), comprising a poorly water-soluble inorganic phosphorus compound, a poorly water-soluble organic phosphorous compound, or a combination of the poorly water-soluble inorganic phosphorus compound and the poorly water-soluble organic phosphorous compound,

the poorly water-soluble inorganic phosphorus compound being ammonium polyphosphate, aluminum phosphite, primary aluminum phosphate, secondary aluminum phosphate, tertiary aluminum phosphate, aluminum metaphosphate, condensed aluminum phosphate, or a combination thereof, and

the poorly water-soluble organic phosphorous compound being melam polyphosphate, melamine polyphosphate, melem polyphosphate, a poorly water-soluble phosphoric acid ester, or a combination thereof.

Based on this structural feature, the thermally expandable fire-resistant sheet is more effectively inhibited from performance deterioration due to exposure to moisture.

(23) The thermally expandable fire-resistant sheet according to any one of (1) to (10), comprising a poorly water-soluble phosphorous compound that is at least one member selected from ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters.

Based on this structural feature, the thermally expandable fire-resistant sheet is more effectively inhibited from performance deterioration due to exposure to moisture.

(24) The thermally expandable fire-resistant sheet according to any one of (1) to (23), wherein the matrix resin is a polyvinyl chloride resin, a chlorinated polyvinyl chloride resin, an ethylene-vinyl acetate copolymer (EVA), an epoxy resin, an olefin-based thermoplastic elastomer (TPO), an ethylene-propylene-diene rubber (EPDM), chloroprene rubber, silicone rubber, polyethylene, or butyl rubber.

(25) The thermally expandable fire-resistant sheet according to any one of (1) to (24), wherein the sheet has a matrix resin in an amount of 10 to 60 mass%.

Based on this structural feature, the resulting thermally expandable fire-resistant sheet can have excellent mechanical strength, moldability, and heat resistance.

(26) The thermally expandable fire-resistant sheet according to any one of (1) to (25), wherein the sheet comprises 10 to 60 mass% of a polyvinyl chloride resin or a chlorinated polyvinyl chloride resin as the matrix resin, 5 to 35 mass% of a plasticizer, 5 to 60 mass% of thermally expandable graphite, and at least one poorly water-soluble phosphorus compound selected from ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters, and has a phosphorus in an amount of 10 mass% or less.

Based on this structural feature, the thermally expandable fire-resistant sheet is more effectively inhibited from performance deterioration due to exposure to moisture, while maintaining excellent fire resistance.

(27) The thermally expandable fire-resistant sheet according to (26), wherein the plasticizer is a phthalate plasticizer, such as di-2-ethylhexyl phthalate (DOP), dibutyl phthalate (DBP), diheptyl phthalate (DHP), or diisodecyl phthalate (DIDP); a fatty acid ester plasticizer, such as di-2-ethylhexyl adipate (DOA), diisobutyl adipate (DIBA), or dibutyl adipate (DBA); an epoxidized ester plasticizer, such as epoxidized soybean oil; a polyester plasticizer, such as adipic acid ester or adipic acid polyester; a trimellitate plasticizer, such as tri-2-ethylhexyl trimellitate (TOTM) or triisononyl trimellitate (TINTM); or a process oil, such as mineral oil.

(28) The thermally expandable fire-resistant sheet according to any one of (1) to (25), wherein the sheet comprises 10 to 60 mass% of a polyvinyl chloride resin or a chlorinated polyvinyl chloride resin as the matrix resin, 5 to 35 mass% of a plasticizer, 5 to 60 mass% of thermally expandable graphite, and 1 to 50 mass% of an inorganic filler, and has phosphorus in an amount of 10 mass% or less.

Based on this structural feature, the thermally expandable fire-resistant sheet is more effectively inhibited from performance deterioration due to exposure to moisture, while maintaining excellent fire resistance.

(29) The thermally expandable fire-resistant sheet according to any one of (1) to (25), wherein the sheet comprises 10 to 60 mass% of an ethylene-vinyl acetate copolymer (EVA), an epoxy resin, an olefin-based thermoplastic elastomer (TPO), an ethylene-propylene-diene rubber (EPDM), chloroprene rubber, silicone rubber, polyethylene, or butyl rubber as the matrix resin, 5 to 60 mass% of thermally expandable graphite, and at least one poorly water-soluble phosphorus compound selected from the group consisting of ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters, and has phosphorus in an amount of 10 mass% or less.
Based on this structural feature, the thermally expandable fire-resistant sheet is inhibited from performance deterioration due to exposure to moisture, while maintaining excellent fire resistance.
(30) The thermally expandable fire-resistant sheet according to (29), further comprising 1 to 50 mass% of an inorganic filler.
Based on this structural feature, the thermally expandable fire-resistant sheet is more effectively inhibited from performance deterioration due to exposure to moisture, while maintaining excellent fire resistance.

The present invention is more specifically explained below with reference to Examples. The present invention is, however, not limited to these Examples.

Examples

1. Production of thermally expandable fire-resistant sheets of Examples 1 to 10 and 14 to 20 and Comparative Example 1 and 5

Compositions having the formulations shown in Table 1 were each placed in a roll, which was set at 150°C, and were roll-kneaded for 5 minutes to obtain each blend. The obtained blend was press-molded at a pressure of 10 MPa at 130°C using a 1.5-mm spacer to obtain a molded sheet with a thickness of 1.5 mm. The amount of each component in Table 1 is expressed in parts by weight.

2. Production of thermally expandable fire-resistant sheets of Examples 11 to 13 and 21 to 23 and Comparative Examples 2 to 4

Compositions having the formulations shown in Table 1 were each supplied to a planetary mixer (ARE500, produced by Thinky Corporation) and kneaded at 700 rpm at ordinary temperature for 3 minutes to obtain each mixture. The mixture was then applied to a PET film and press-molded at 10 MPa at 20°C to obtain a molded sheet with a thickness of 1.5 mm. The molded sheet was then disposed in a 90°C thermostat bath for 10 hours and cured to produce a thermally expandable fire-resistant sheet.

3. Production of thermally expandable fire-resistant sheets of Examples 24 to 41

Compositions having the formulations shown in Table 2 were each placed in a roll, which was set at 150°C, and were roll-kneaded for 5 minutes to obtain each blend. The obtained blend was press-molded at a pressure of 10 MPa at 130°C using a 1.5-mm spacer to produce a molded sheet with a thickness of 1.5 mm. The amount of each component in Table 2 is expressed in parts by mass.

4. Production of thermally expandable fire-resistant sheets of Examples 42 to 56

Compositions having the formulations shown in Tables 2 and 3 were each placed into a roll, which was set at 150°C, and were roll-kneaded for 5 minutes to obtain each blend. The obtained blend was press-molded at 10 MPa at 130°C using a 1.5-mm spacer to produce a molded sheet with a thickness of 1.5 mm. The amount of each component in Tables 2 and 3 is expressed in parts by mass.
The following compounds were used as components shown in Table 1 to 3.
Polyvinyl chloride resin (product name: TK-1000, Shin-Etsu Chemical Co., Ltd.).
Chlorinated polyvinyl chloride resin (product name: HA-53, Tokuyama Sekisui Chemical Co., Ltd.).
EVA resin (trade name: EV460, Du Pont-Mitsui Polychemicals Co., Ltd.).
Epoxy resin (product name: FL-079, Mitsubishi Chemical Corporation).
Epoxy resin (product name: E-807, Mitsubishi Chemical, Corporation).
TPO (product name: Milastomer 5020BS, produced by Mitsui Chemicals, Inc.).
EPDM (product name: ENB-EPT X-3012P, Mitsui Chemicals, Inc.). Chloroprene rubber (product name: Denka Chloroprene MT-100, Denka Company Limited).
Silicone rubber (product name: HCR SH502U, Dow Corning Toray Co., Ltd.).
Polyethylene (product name: Novatec LD ZE41K, Mitsubishi Chemical Corporation).
Butyl rubber (product name: JSR BUTYL065, JSR Corporation). Plasticizer: diisodecyl phthalate (product name: DIDP, J-Plus Co., Ltd.).
Thermally expandable graphite (product name: CA-60N, Air Water Inc.).
Thermally expandable graphite (product name: EXA50SE160, Fuji Graphite Industries Co., Ltd.).
Thermally expandable graphite (product name: ADT351, expansion onset temperature: about 200°C, ADT Corporation).
Inorganic filler: calcium carbonate (product name: Whiton BF-300, Bihoku Funka Kogyo Co., Ltd.).
Flame retardant: ammonium polyphosphate (product name: AP-422, Clariant).
Flame retardant: ammonium polyphosphate (AP-462, Clariant).
Flame retardant: aluminum phosphite (product name: APA100, Taihei Chemical Industrial Co., Ltd.).
Flame retardant: primary aluminum phosphate (product name: 100P, Taki Chemical Co., Ltd.).
Flame retardant: melamine polyphosphate (product name: MPP-A, Sanwa Chemical Co., Ltd.).
Flame retardant: melam polyphosphate (product name: Phosmel® 200, Nissan Chemical Corporation).
Flame retardant: a poorly water-soluble organic phosphorous compound (product name: Exolit OP1230, produced by Clariant).
Flame retardant: secondary aluminum phosphate (Taihei Chemical Industrial Co., Ltd.).
Flame retardant: tertiary aluminum phosphate (Taihei Chemical Industrial Co., Ltd.).
Flame retardant: aluminum metaphosphate (Taihei Chemical Industrial Co., Ltd.).
Flame retardant: condensed aluminum phosphate (product name: K-WHITE #85, Tayca Corporation).
Flame retardant: condensed aluminum phosphate (product name: K-BOND #90, Tayca Corporation).
Flame retardant: condensed aluminum phosphate (product name: K-FRESH MZO, Tayca Corporation).
Flame retardant: tricresyl phosphate (product name: Sansocizer TCP, New Japan Chemical Co., Ltd.).
Flame retardant: a spirocyclic diphosphate compound (product name: FCX-210, Teijin, Ltd.).

5. Evaluation Criteria for Tests

Dissolution rate

Five sheets of each sample were prepared as test pieces (50 mm long, 50 mm wide, and 1.5 mm thick) from the molded sheets of Examples 1 to 56 and Comparative Examples 1 to 5, and immersed in 200 g of pure water. After immersion at 60°C in a closed container for 1 week, each sample was removed and the pure water in which the sample had been immersed was heated at 60°C for 96 hours for evaporation and drying. The mass of the resulting precipitate was measured. The percentage of dissolution was determined using this value.

Expansion magnification

Test pieces (100 mm long, 100 mm wide, 1.5 mm thick) prepared from the molded sheets of Examples 1 to 56 and Comparative Examples 1 to 5 and those of the same shape were immersed in 500 mL of pure water at 60°C in a closed container for 1 week, and then removed from the water. The samples were kept at 60°C for 96 hours for evaporation and drying, and test pieces thus obtained were placed at the bottom of a stainless steel holder (101-mm square, 80 mm high) and supplied to an electric furnace and heated at 600°C for 30 minutes. The height (the highest portion), width, length, and thickness of each test piece were then measured to calculate the expansion magnification according to the following formula:

```
(Thickness of test piece after heating)/(Thickness of test piece
before heating).
```

Compressive strength

The test pieces after heating, which were used to determine the expansion magnification, were supplied to a compression tester (Finger-Feeling Tester, produced by Kato Tech Co., Ltd.) and compressed with a three-point indenter having a diameter of 1 mm at a speed of 0.1 cm/s to measure the maximum stress during 10-mm compression from the upper surface of the residue, thus determining the compressive strength of each test piece after combustion.

Evaluation

Test pieces with a dissolution rate of more than 3 mass% were evaluated as C. Test pieces with a dissolution rate of more than 1.5 mass% but not more than 3.0 mass% were evaluated as B. Test pieces with a dissolution rate of not more than 1.5 mass% were evaluated as A.

6. Test Results

Table 1 shows the measurement results of the expansion magnification, compressive strength, and dissolution rate of the test pieces of Examples 1 to 56 and Comparative Examples 1 to 5.

The thermally expandable fire-resistant sheet of Example 19 did not contain a phosphorus compound. The thermally expandable fire-resistant sheets of Examples 1, 6, 7, 14, and 15 contained ammonium polyphosphate. The thermally expandable fire-resistant sheets of Examples 2, 8, 11, 18, 20, 21, 24, 27, 30, 33, 36, 39, 49, and 50 contained aluminum phosphite. The thermally expandable fire-resistant sheets of Examples 3, 9, 17, 25, 28, 31, 34, 37, 40, 55, and 56 contained melamine polyphosphate. The thermally expandable fire-resistant sheets of Examples 4, 10, 12, 16, 20, 26, 29, 32, 35, 38, 41, 51, and 52 contained melam polyphosphate. The thermally expandable fire-resistant sheets of Examples 5, 13, 23, 53, and 54 contained a poorly water-soluble organic phosphorous compound. The thermally expandable fire-resistant sheet of Example 22 contained primary aluminum phosphate. The thermally expandable fire-resistant sheet of Example 42 contained secondary aluminum phosphate. The thermally expandable fire-resistant sheet of Example 43 contained tertiary aluminum phosphate. The thermally expandable fire-resistant sheet of Example 44 contained aluminum metaphosphate. The thermally expandable fire-resistant sheets of Examples 45 to 47 contained condensed aluminum phosphate. The thermally expandable fire-resistant sheets of Example 48 contained tricresyl phosphate.

The thermally expandable fire-resistant sheets of Examples 1 to 56 were good in terms of expansion magnification, compressive strength, and dissolution rate. In contrast, the thermally expandable fire-resistant sheets of Comparative Examples 1 to 5 exhibited a high percentage of dissolution and were found to have poor water resistance. Thermally expandable fire-resistant sheets having a low percentage of dissolution had little change in compressive strength after dissolution, and sufficiently maintained the compressive strength.

Table 1

Ex.: Example; Comp. Ex.: Comparative Example

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex.1 | Comp. Ex.2 | Comp. Ex.3 | Comp. Ex.4 |
|---|---|---|---|---|---|---|---|---|---|---|---|---|---|---|---|---|---|
| TK-1000 | 60 | 60 | 60 | 60 | 60 | 0 | 0 | 0 | 0 | 0 | 0 | 0 | 0 | 60 | 0 | 0 | 0 |
| DIDP | 40 | 40 | 40 | 40 | 40 | 0 | 0 | 0 | 0 | 0 | 0 | 0 | 0 | 40 | 0 | 0 | 0 |
| EV460 | 0 | 0 | 0 | 0 | 0 | 100 | 100 | 100 | 100 | 100 | 0 | 0 | 0 | 0 | 0 | 0 | 0 |
| FL-079 | 0 | 0 | 0 | 0 | 0 | 0 | 0 | 0 | 0 | 0 | 50 | 50 | 50 | 0 | 50 | 50 | 50 |
| E-807 | 0 | 0 | 0 | 0 | 0 | 0 | 0 | 0 | 0 | 0 | 50 | 50 | 50 | 0 | 50 | 50 | 50 |
| CA60N | 50 | 50 | 50 | 50 | 50 | 50 | 50 | 50 | 50 | 50 | 50 | 50 | 50 | 50 | 50 | 50 | 50 |
| AP422 | 0 | 0 | 0 | 0 | 0 | 50 | 0 | 0 | 0 | 0 | 0 | 0 | 0 | 50 | 50 | 0 | 0 |
| AP462 | 50 | 0 | 0 | 0 | 0 | 0 | 50 | 0 | 0 | 0 | 0 | 0 | 0 | 0 | 0 | 50 | 0 |
| APA100 | 0 | 50 | 0 | 0 | 0 | 0 | 0 | 50 | 0 | 0 | 50 | 0 | 0 | 0 | 0 | 0 | 0 |
| MPP-A | 0 | 0 | 50 | 0 | 0 | 0 | 0 | 0 | 50 | 0 | 0 | 0 | 0 | 0 | 0 | 0 | 50 |
| Phosmel200 | 0 | 0 | 0 | 50 | 0 | 0 | 0 | 0 | 0 | 50 | 0 | 50 | 0 | 0 | 0 | 0 | 0 |
| Exolit OP1230 | 0 | 0 | 0 | 0 | 50 | 0 | 0 | 0 | 0 | 0 | 0 | 0 | 50 | 0 | 0 | 0 | 0 |
| Amount of Phosphorus in the sheet (%) | 7.5 | 7.3 | 3.0 | 2.6 | 5.8 | 7.9 | 7.5 | 7.3 | 3.0 | 2.6 | 7.3 | 2.6 | 5.8 | 7.9 | 7.9 | 7.5 | 3 |
| Dissolution rate | 1.64 | 0.10 | 1.32 | 0.09 | 0.23 | 2.00 | 0.84 | 0.06 | 1.53 | 0.10 | 0.43 | 0.30 | 0.68 | 5.26 | 12.81 | 13.78 | 3.19 |
| Expansion magnification | 25.3 | 23.4 | 24.8 | 25.2 | 23.4 | 26.5 | 25.8 | 24.9 | 25.5 | 24.7 | 29.8 | 28.6 | 29.3 | 24.6 | 30.4 | 29.6 | 29.2 |
| Compressive strength of the residue | 0.51 | 0.74 | 0.43 | 0.46 | 0.57 | 0.38 | 0.35 | 0.51 | 0.33 | 0.36 | 0.48 | 0.5 | 0.39 | 0.48 | 0.56 | 0.59 | 0.45 |
| Expansion magnification (after immersion in water) | 25.8 | 23.6 | 24.5 | 25 | 23.1 | 26.8 | 25.3 | 25.4 | 25.2 | 24.5 | 29.6 | 29.4 | 28.9 | 24.2 | 30.9 | 29.4 | 29.8 |
| Compressive strength of the residue (after immersion in water) | 0.5 | 0.74 | 0.41 | 0.45 | 0.55 | 0.32 | 0.33 | 0.51 | 0.3 | 0.35 | 0.48 | 0.48 | 0.38 | 0.19 | 0.08 | 0.06 | 0.22 |
| Evaluation | B | A | A | A | A | B | A | A | B | A | A | A | A | C | C | C | C |

## EP 3 575 348 A1

Table 1 (continued)                                      Ex.: Example; Comp. Ex.: Comparative Example

| | Ex. 14 | Ex. 15 | Ex. 16 | Ex. 17 | Ex. 18 | Ex. 19 | Ex. 20 | Ex. 21 | Ex. 22 | Ex. 23 | Comp. Ex. 5 |
|---|---|---|---|---|---|---|---|---|---|---|---|
| TK-1000 | | | | | | | 90 | | | | 90 |
| HA-53F | | | | | | 65 | | | | | |
| DIDP | | | | | | 35 | 55 | | | | 60 |
| EV460 | | | | | | | | 100 | 100 | 100 | |
| FL-079 | 25 | 25 | 25 | 25 | 25 | | | | | | |
| E-807 | 54 | 35 | 35 | 35 | 35 | | | | | | |
| CA60N | 55 | 55 | 55 | 55 | 55 | | | | | | 75 |
| EXA50SE160 | | | | | | | 75 | 50 | 50 | 50 | |
| ADT351 | | | | | | 75 | | | | | |
| BF300 | 55 | 55 | 55 | | | 10 | 40 | | | | 37 |
| AP422 | 54 | | | | | | | | | | 37 |
| AP462 | | 54 | | | | | | | | | |
| APA100 | | | | | 54 | | 30 | 50 | | | |
| Primary aluminum phosphate 100P | | | | | | | | | 50 | | |
| MPP-A | | | | 54 | | | | | | | |
| Phosmel200 | | | 54 | | | | 6 | | | | |
| Exolit OP1230 | | | | | | | | | | 50 | |
| Amount of Phosphorus in of the sheet (%) | 7.0 | 7.2 | 2.5 | 3.8 | 9.3 | 0.0 | 3.2 | 7.3 | 7.5 | 5.8 | 3.9 |
| Dissolution rate | 1.99 | 2.07 | 0.21 | 1.61 | 1.63 | 0.05 | 0.28 | 0.08 | 0.09 | 0.45 | 3.63 |
| Expansion magnification | 34.8 | 35.6 | 32.4 | 31.2 | 30.8 | 40.4 | 24.9 | 26.8 | 26.4 | 25.8 | 25.8 |
| Compressive strength of the residue | 0.51 | 0.56 | 0.51 | 0.48 | 0.55 | 0.35 | 0.75 | 0.34 | 0.4 | 0.35 | 0.38 |
| Expansion magnification (after immersion in water) | 35.2 | 36.4 | 33.8 | 32.5 | 31.6 | 40.8 | 24.3 | 26.3 | 26.7 | 25.6 | 25.4 |
| Compressive strength of the residue (after immersion in water) | 0.34 | 0.32 | 0.5 | 0.43 | 0.49 | 0.35 | 0.73 | 0.32 | 0.38 | 0.34 | 0.15 |
| Evaluation | B | B | A | B | B | A | A | A | A | A | C |

14

Table 2

| | Ex.: Example | | | | | | | | | | | | | | | | | |
|---|---|---|---|---|---|---|---|---|---|---|---|---|---|---|---|---|---|---|
| | Ex. 24 | Ex. 25 | Ex. 26 | Ex. 27 | Ex. 28 | Ex. 29 | Ex. 30 | Ex. 31 | Ex. 32 | Ex. 33 | Ex. 34 | Ex. 35 | Ex. 36 | Ex. 37 | Ex. 38 | Ex. 39 | Ex. 40 | Ex. 41 |
| Milastomer 5020BS | 100 | 100 | 100 | | | | | | | | | | | | | | | |
| ENB-EPT X-3012P | | | | 100 | 100 | 100 | | | | | | | | | | | | |
| Denka Chloroprene MT-100 | | | | | | | 100 | 100 | 100 | | | | | | | | | |
| HCRSH502U | | | | | | | | | | 100 | 100 | 100 | | | | | | |
| NovatecTMLD ZE41K | | | | | | | | | | | | | 100 | 100 | 100 | | | |
| JSR BUTYL065 | | | | | | | | | | | | | | | | 100 | 100 | 100 |
| CA60N | 50 | 50 | 50 | 50 | 50 | 50 | 50 | 50 | 50 | 50 | 50 | 50 | 50 | 50 | 50 | 50 | 50 | 50 |
| APA100 | 50 | | | 50 | | | 50 | | | 50 | | | 50 | | | 50 | | |
| MPP-A | | 50 | | | 50 | | | 50 | | | 50 | | | 50 | | | 50 | |
| Phosmel200 | | | 50 | | | 50 | | | 50 | | | 50 | | | 50 | | | 50 |
| Amount of Phosphorus in the sheet (%) | 7.3 | 3.0 | 2.6 | 7.3 | 3.0 | 2.6 | 7.3 | 3.0 | 2.6 | 7.3 | 3.0 | 2.6 | 7.3 | 3.0 | 2.6 | 7.3 | 3.0 | 2.6 |
| Dissolution rate | 0.07 | 1.46 | 0.19 | 0.09 | 1.63 | 0.34 | 0.08 | 1.67 | 0.41 | 0.09 | 1.72 | 0.45 | 0.06 | 1.28 | 0.19 | 0.09 | 1.81 | 0.51 |
| Expansion magnification | 24.8 | 25.1 | 24.9 | 25.6 | 25.2 | 25.9 | 23.3 | 23.8 | 24.2 | 24.1 | 23.9 | 24.7 | 26.2 | 26.9 | 27.2 | 24.1 | 23.8 | 24.6 |
| Compressive strength of the residue | 0.48 | 0.32 | 0.42 | 0.45 | 0.34 | 0.4 | 0.72 | 0.54 | 0.65 | 0.68 | 0.61 | 0.65 | 0.43 | 0.32 | 0.38 | 0.46 | 0.31 | 0.41 |
| Expansion magnification (after immersion in water) | 24.9 | 25.3 | 24.6 | 25.2 | 25.9 | 24.8 | 23.5 | 23.4 | 25.1 | 24.1 | 23.4 | 24.2 | 26 | 27.2 | 26.8 | 25.1 | 24.2 | 24.5 |

(continued)

| | | Ex. 24 | Ex. 25 | Ex. 26 | Ex. 27 | Ex. 28 | Ex. 29 | Ex. 30 | Ex. 31 | Ex. 32 | Ex. 33 | Ex. 34 | Ex. 35 | Ex. 36 | Ex. 37 | Ex. 38 | Ex. 39 | Ex. 40 | Ex. 41 |
|---|---|---|---|---|---|---|---|---|---|---|---|---|---|---|---|---|---|---|---|
| | Ex.: Example | | | | | | | | | | | | | | | | | | |
| Compressive strength of the residue (after immersion in water) | | 0.48 | 0.3 | 0.41 | 0.44 | 0.32 | 0.4 | 0.72 | 0.53 | 0.65 | 0.68 | 0.6 | 0.64 | 0.43 | 0.31 | 0.38 | 0.46 | 0.3 | 0.41 |
| Evaluation | | A | A | A | A | B | A | A | B | A | A | B | A | A | A | A | A | B | A |

| | Ex. 42 | Ex. 43 | Ex. 44 | Ex. 45 | Ex. 46 | Ex. 47 | Ex.48 |
|---|---|---|---|---|---|---|---|
| TK-1000 | 60 | 60 | 60 | 60 | 60 | 60 | 60 |
| DIDP | 40 | 40 | 40 | 40 | 40 | 40 | 0 |
| ADT351 | | | | 50 | 50 | 50 | 50 |
| EXA50SE160 | 50 | 50 | 50 | | | | |
| Secondary aluminum phosphate | 50 | | | | | | |
| Tertiary aluminum phosphate | | 50 | | | | | |
| Aluminum metaphosphate | | | 50 | | | | |
| K-WHITE #85 | | | | 50 | | | |
| K-BOND #90 | | | | | 50 | | |
| K-FRESH MZO | | | | | | 50 | |
| Sansocizer TCP | | | | | | | 40 |
| BF300 | | | | | | | 50 |
| Amount of Phosphorus in the sheet (%) | 6.8 | 6.4 | 8.8 | 8.5 | 8.0 | 8.8 | 1.7 |
| Dissolution rate | 2.48 | 1.86 | 1.48 | 2.59 | 2.31 | 2.42 | 0.88 |

(continued)

| | Ex. 42 | Ex. 43 | Ex. 44 | Ex. 45 | Ex. 46 | Ex. 47 | Ex.48 |
|---|---|---|---|---|---|---|---|
| Expansion magnification | 23.6 | 23.4 | 23.5 | 27.2 | 26.8 | 27.3 | 27.5 |
| Compressive strength of the residue | 0.34 | 0.42 | 0.41 | 0.38 | 0.36 | 0.35 | 0.31 |
| Expansion magnification (after immersion in water) | 23.4 | 23.4 | 23.1 | 27.5 | 27.2 | 27 | 26.8 |
| Compressive strength of the residue (after immersion in water) | 0.31 | 0.4 | 0.4 | 0.34 | 0.33 | 0.32 | 0.3 |
| Evaluation | B | B | A | B | B | B | A |

17

EP 3 575 348 A1

Table 3

| | Example 49 | Example 50 | Example 51 | Example 52 | Example 53 | Example 54 | Example 55 | Example 56 |
|---|---|---|---|---|---|---|---|---|
| TK-1000 | 60 | 60 | 60 | 60 | 60 | 60 | 60 | 60 |
| DIDP | 40 | 40 | 40 | 40 | 40 | 40 | 40 | 40 |
| ADT351 | 50 | 50 | 50 | 50 | 50 | 50 | 50 | 50 |
| APA100 | 25 | 10 | | | | | | |
| Phosmel200 | | | 25 | 10 | | | | |
| FCX-210 | | | | | 25 | 10 | | |
| MPP-A | | | | | | | 25 | 10 |
| BF300 | 25 | 40 | 25 | 40 | 25 | 40 | 25 | 40 |
| Amount of Phosphorus in the sheet (%) | 3.65 | 1.46 | 1.3125 | 0.525 | 1.875 | 0.75 | 1.5 | 0.6 |
| Dissolution rate | 0.04 | 0.03 | 0.06 | 0.05 | 0.24 | 0.17 | 1.05 | 0.76 |
| Expansion magnification | 25.2 | 26.1 | 24.8 | 25.6 | 25.2 | 24.5 | 26.1 | 26.4 |
| Compressive strength of the residue | 0.65 | 0.52 | 0.4 | 0.36 | 0.38 | 0.33 | 0.39 | 0.34 |
| Expansion magnification (after immersion in water) | 25.4 | 25.5 | 24.9 | 25.3 | 26.1 | 25.2 | 26.3 | 26.4 |
| Compressive strength of the residue (after immersion in water) | 0.62 | 0.5 | 0.38 | 0.34 | 0.34 | 0.3 | 0.35 | 0.3 |
| Evaluation | A | A | A | A | A | A | A | A |

**Claims**

1.  A thermally expandable fire-resistant sheet comprising a matrix resin and thermally expandable graphite, the sheet having a dissolution rate of 3% or less after immersion in pure water at 60°C for 1 week.

2.  The thermally expandable fire-resistant sheet according to claim 1, wherein an expansion residue after heating at 600°C for 30 minutes has a compressive strength of 0.2 kgf/cm$^2$ or more.

3.  The thermally expandable fire-resistant sheet according to claim 1 or 2, wherein the sheet has phosphorus in an amount of 10 mass% or less.

4.  The thermally expandable fire-resistant sheet according to any one of claims 1 to 3, wherein the sheet has a thermally expandable graphite in an amount of 15 mass% or more and less than 60 mass%.

5. The thermally expandable fire-resistant sheet according to any one of claims 1 to 4, wherein the sheet comprises a poorly water-soluble phosphorus compound and phosphorus in an amount of 0.5 mass% or more.

6. The thermally expandable fire-resistant sheet according to any one of claims 1 to 5, wherein the sheet comprises a poorly water-soluble phosphorus compound in an amount of 3 mass% or more.

7. The thermally expandable fire-resistant sheet according to claim 5 or 6, wherein the poorly water-soluble phosphorus compound is at least one member selected from the group consisting of ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters.

8. The thermally expandable fire-resistant sheet according to any one of claims 1 to 4, comprising at least one poorly water-soluble phosphorus compound selected from the group consisting of ammonium polyphosphate, aluminum phosphite, primary aluminum phosphate, secondary aluminum phosphate, tertiary aluminum phosphate, aluminum metaphosphate, condensed aluminum phosphate, melam polyphosphate, melamine polyphosphate, melem polyphosphate, and poorly water-soluble phosphoric acid esters.

Fig. 1

## INTERNATIONAL SEARCH REPORT

| International application No. |
| --- |
| PCT/JP2018/002157 |

A.  CLASSIFICATION OF SUBJECT MATTER
Int.Cl.  C08J5/18(2006.01)i, C08K3/04(2006.01)i, C08K3/32(2006.01)i,
        C08K5/5399(2006.01)i, C08L101/00(2006.01)i

According to International Patent Classification (IPC) or to both national classification and IPC

B.  FIELDS SEARCHED

Minimum documentation searched (classification system followed by classification symbols)
Int.Cl.  C08J5/00-5/02, C08J5/12-5/22, C08K3/00-13/08, C08L1/00-101/14, E04B1/62-1/99,
        E06B5/00-5/20

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2017-7333 A (SEKISUI CHEMICAL CO., LTD.) 12 January 2017, examples, table 1 (Family: none) | 1-8 |
| A | JP 2013-227685 A (TORAY INDUSTRIES, INC.) 07 November 2013, paragraph [0057] (Family: none) | 1-8 |
| A | JP 2005-290152 A (TORAY INDUSTRIES, INC.) 20 October 2005, paragraph [0036] (Family: none) | 1-8 |

☒   Further documents are listed in the continuation of Box C.        ☐   See patent family annex.

| | |
| --- | --- |
| *       Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| 17 April 2018 (17.04.2018) | 24 April 2018 (24.04.2018) |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/002157 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 2017-8310 A (SEKISUI CHEMICAL CO., LTD.) 12 January 2017, examples, table 1 (Family: none) | 1-8 |
| X | WO 2016/182059 A1 (SEKISUI CHEMICAL CO., LTD.) 17 November 2016, examples, table 1 (Family: none) | 1-8 |
| X | WO 2016/117699 A1 (SEKISUI CHEMICAL CO., LTD.) 28 July 2016, examples, table 1 (Family: none) | 1-2, 4, 6-8 |
| X | JP 2000-34365 A (SEKISUI CHEMICAL CO., LTD.) 02 February 2000, example 3, table 1 (Family: none) | 1, 3, 5-8 |
| X | JP 2006-274134 A (DENKI KAGAKU KOGYO KABUSHIKI KAISHA) 12 October 2006, examples, table 1 (Family: none) | 1, 4, 5-8 |
| P, X | WO 2017/126654 A1 (SEKISUI CHEMICAL CO., LTD.) 27 July 2017, example 20, table 3 (Family: none) | 1-8 |
| A | JP 2013-147586 A (MITSUI CHEMICALS, INC.) 01 August 2013 (Family: none) | 1-8 |

Form PCT/ISA/210 (continuation of second sheet) (January 2015)